# EUROPÄISCHE PATENTSCHRIFT

(11) **EP 3 984 106 B1**
(45) Veröffentlichungstag und Bekanntmachung des Hinweises auf die Patenterteilung: **23.08.2023**
(21) Anmeldenummer: 20735484.6
(22) Anmeldetag: 13.06.2020
(51) Int. Cl.: H02G 11/00, F16G 13/18, F16L 3/015, F16G 13/16, H02G 3/04, H02G 3/32

(54) **KOMPAKTE LEITUNGSFÜHRUNG FÜR REINRAUMANWENDUNGEN, SOWIE HERSTELLVERFAHREN UND HÜLLEINHEIT HIERFÜR**
COMPACT CONDUIT FOR CLEAN ROOM APPLICATIONS, AND PRODUCTION METHOD AND SLEEVE UNIT FOR SAME
GUIDAGE DE CÂBLES COMPACT POUR APPLICATIONS EN SALLES BLANCHES, ET PROCÉDÉ DE FABRICATION ET UNITÉ DE GAINAGE ASSOCIÉS

(30) Priorität: 11.06.2019 DE 202019103276 U; 14.01.2020 WO PCT/EP2020/050842; 14.01.2020 WO PCT/IB2020/000047
(43) Veröffentlichungstag der Anmeldung: 20.04.2022
(73) Patentinhaber: Igus GmbH, 51147 Köln (DE)
(72) Erfinder: RÖSSEL, Rainer, 53567 Buchholz (DE); HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/EP2020/025283
(87) Internationale Veröffentlichungsnummer: WO 2021/004654

(56) Entgegenhaltungen:
- EP-A1- 1 793 151
- WO-A1-2016/042134
- DE-A1-102016 000 864
- DE-B3-102006 019 133
- TW-A- 201 131 588
- US-A- 3 160 175
- US-A1- 2012 205 498
- US-B2- 7 784 259

## Beschreibung

Die Erfindung betrifft allgemein das Gebiet der Leitungsführungseinrichtungen für Leitungen, wie z.B. Kabel zur Signal- oder Stromversorgung oder pneumatische bzw. hydraulische Schläuche oder dergleichen, die zwischen zwei relativbeweglichen Anschlussstelle einer Maschine oder Anlage dynamisch geführt werden sollen. Vorgeschlagen wird insbesondere eine Leitungsführungseinrichtung die zur Anwendung in Reinräumen geeignet ist, beispielsweise in der Halbleiter- oder Flachbildschirm-Herstellung, in pharmazeutischen Anlagen, in medizinischen Geräten, usw. In derartigen Anwendungen ist das Freisetzen von Partikeln durch die Leitungsführungseinrichtungen besonders unerwünscht und muss weitestgehend minimiert werden.

Energieführungsketten sind typische Leitungsführungseinrichtungen, herkömmliche Energieführungsketten in Gliederketten-Bauweise mit Drehgelenken jedoch für Reinraumanwendung wenig geeignet, da die solche Gliederketten selbst abriebbedingt im Betrieb Partikel freisetzen. Eine in dieser Hinsicht weiterentwpickelte reinraumtaugliche Energieführungskette wurde in WO 02/086349 A1 vorgeschlagen. Diese Energieführungskette setzt dank biegsamer Gelenkverbindungen deutlich weniger Abrieb frei.

Ein bekanntes Problem besteht aber darin, dass auch die in einer ggf. abriebarmen Energieführungskette geführten Leitungen selbst im Betrieb Partikel freisetzen, da diese beim Verfahren bewegen, biegen und aneinander reiben. So geben z.B. die Ummantelungen der Kabel selbst beim Verfahren auch Partikel an die Umgebung ab.

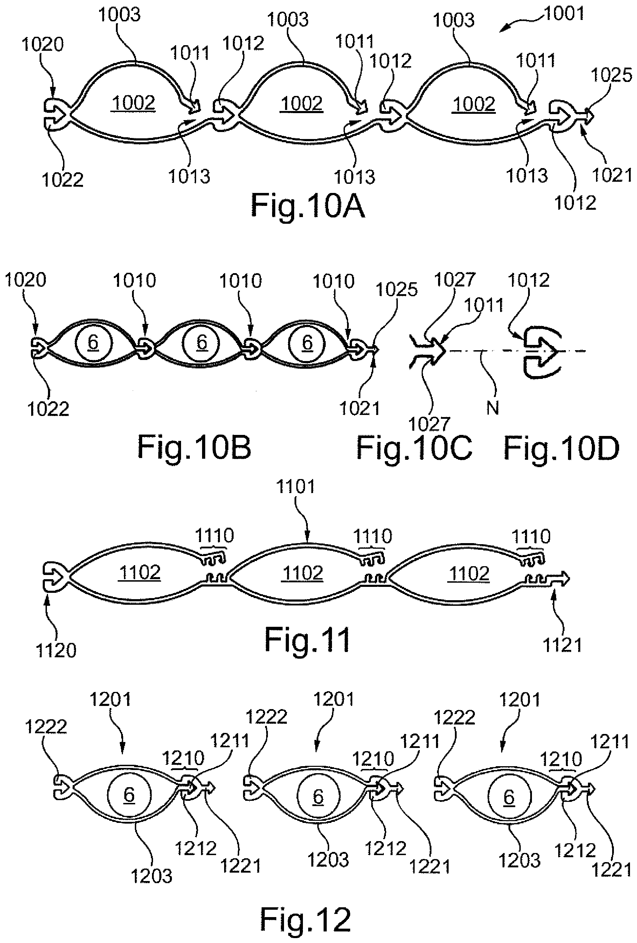

Aus diesem Grund ist es bekannt, die Leitungen staubdicht zu umhüllen. Mehrere zu diesem Zweck weiterentwickelte Leitungsführungseinrichtungen für Reinraumanwendungen wurden von der Anmelderin in der WO 2016/042134 A1 vorgeschlagen. Eine Ausführungsform umfasst mehrere umfänglich geschlossene Wellschläuche, die durch ein externes Stützgerippe parallel zueinander gehalten werden, wobei eine weitere Ausführungsform aus mehreren Längsabschnitten in Form von Halbschalen mit Verschlussprofilen zusammengesetzt ist. Eine dieser Lösungen (cf. FIG.10-16) ist inzwischen unter der Handelsbezeichnung "e-skin" von der Anmelderin (igus GmbH, D-51147 Köln) erhältlich.

Die vorliegende Erfindung betrifft nun speziell eine zur Reinraumanwendung geeignete Leitungsführungseinrichtung bzw. Leitungsschutzführung mit einer länglichen, flexiblen Umhüllung die reversibel bzw. hin- und hergehend verfahrbar ist, typisch unter Bildung eines Umlenkbogens zwischen zwei Trumen zwischen einer ersten Anschlussstelle und einer dazu relativbeweglichen Anschlussstelle. Dabei hat die vorgeschlagene Umhüllung eine Anzahl rohrförmig ausgeprägter Aufnahmen zur Führung mindestens einer Leitung, wobei jede Aufnahme sich kanalartig in einer Längsrichtung von einem ersten Ende zu einem zweiten Ende erstreckt, mit welchen die Schutzführung an den Anschlussstellen angebracht ist.

Gattungsgemäße Leitungsschutzführungen dieser Art sind bspw. unter der Handelsbezeichnung "GORE^{®} Trackless High Flex" von der Fa. W. L. Gore & Associates, Inc. oder unter der Handelsbezeichnung "ChannelFLEX^{™}" bzw. "EcoFlex^{™}" von der Fa. Hitachi Cable America Inc. erhältlich. Eine Variante der letztgenannten Leitungsschutzführung, die hier als gattungsbildender Stand der Technik (nach dem Oberbegriff aus Anspruch 1) angesehen wird, ist z.B. in DE 10 2012 100 290 B4 bzw. US 8,662,456 B2 beschrieben.

Typischerweise werden diese bekannten Leitungsschutzführungen, entweder durch Einlaminieren von Leitungen zwischen zwei Folien hergestellt, welche verschweißt werden dann die Umhüllung bilden. Diese Art der Herstellung ist z.B. bekannt aus WO 2004/049509 A2 (dort Seite 11 unten). Ebenfalls bekannt ist das Einextrudieren von Leitungen, insbesondere elektrischer Kabel, in eine zusätzliche Umhüllung, wie z.B. bereits in EP 0 490 022 A2 oder in DE 11 2014 005 554 T5 beschrieben.

Derartige Leitungsschutzführungen sind technisch einfach aufgebaut und bauen kompakt und leicht. Sie haben jedoch bspw. gegenüber WO 2016/042134 A1 einen erheblichen Nutzungsnachteil. Eine Wartung, insbesondere ein Austausch einer einzelnen Leitung oder eines einzelnen Leitungsstrangs innerhalb einer mehrere Leitungen oder mehrere Leitungsstränge umfassenden Leitungsführung, ist nur mit erheblichem Aufwand möglich. Es kann insbesondere vor Ort kein Austausch einzelner Leitungen oder einzelner Leitungsstränge durch bereits mit den gewünschten Steckern bzw. Kupplungen passend vorkonfektionierte Leitungen erfolgen. Dies würde die Wartung erheblich vereinfachen und Kosten senken. Im Gegensatz dazu werden gattungsgemäße Leitungsführungen typisch vollständig als Paket erneuert, sodass dabei auch intakte Leitungen ausgetauscht werden müssen. Außerdem ist eine nachträgliche Veränderung einer installierten Leitungsführung, z.B. zur Ergänzung mit weiteren Leitungen, nicht ohne weiteres möglich.

Vor diesem Hintergrund liegt eine erste Aufgabe nach einem ersten Hauptanspruch der vorliegenden Erfindung darin, eine relativ kompakt bauende und/oder gewichtsarme Leitungsführung vorzuschlagen, welche die vorgenannten Nachteile zumindest teilweise überwindet. Die Erfindung soll insbesondere den Austausch einzelner Leitungen oder einzelner Leitungsstränge und/oder nachträgliche Veränderungen vereinfachen.

Weiterhin soll ein neuartiges Herstellverfahren für eine solche Leitungsführung vorgeschlagen werden.

Dies wird erreicht durch ein Herstellverfahren nach Anspruch 1 bzw. ein Leitungsschutzführung nach Anspruch 8.

### ERSTER ASPEKT (Anspr.1-16)

Vorgeschlagen wird ein Verfahren zur Herstellung einer Leitungsführung für eine Reinraumanwendung, mit elektrischen Leitungen und mit einer länglichen, flexiblen Umhüllung die hin- und hergehend, insbesondere unter Bildung eines Umlenkbogens zwischen zwei Trumen, verfahrbar ist, wobei die flexible Umhüllung eine Anzahl paralleler Aufnahmen für jeweils mindestens eine Leitung aufweist, wobei jede Aufnahme sich kanalartig in einer Längsrichtung von einem ersten Ende zu einem zweiten Ende erstreckt; das Verfahren umfassend zumindest die Schritte:
- Bereitstellen von mindestens einem Leitungsbündel von zusammenhängenden Leitungen; und
- Bereitstellen der flexiblen Umhüllung.

Erfindungsgemäß ist im Verfahren nach Anspruch 1 vorgesehen, dass die Umhüllung vorgefertigt ist und das Leitungsbündel in eine Aufnahme der vorgefertigten Umhüllung eingebracht wird, wobei
- die vorgefertigte Umhüllung mindestens eine, insbesondere mehrere, Hülleinheit(en) mit zwei zusammenwirkenden Verschlussprofilen eines Verschlusses umfasst zum staubdichten Schließen eines geöffneten Zustands und das Leitungsbündel quer zur Längsrichtung in die geöffnete Umhüllung eingefügt wird;
   oder
- die vorgefertigte Umhüllung mindestens eine, insbesondere mehrere, umfänglich geschlossen hergestellte Hülleinheit(en) umfasst und das Leitungsbündel in Längsrichtung in die geschlossene Hülleinheit eingezogen wird.

Somit werden die Leitungen nicht einlaminiert oder mit zu einem stoffschlüssigen Flachbandkabel extrudiert und sind deshalb leicht und zerstörungsfrei, auch einzeln austauschbar.

Gemäß einem weiteren Kerngedanken ist bei einer Leitungsführung nach dem Oberbegriff aus Anspruch 8 erfindungsgemäß vorgesehen, dass die Umhüllung separat vorgefertigt ist und in zumindest einigen Aufnahmen jeweils ein Leitungsbündel eingebracht ist, wobei die Umhüllung den Außenmantel der Leitungsbündel bildet.

Ein weiterer entscheidender Vorteil liegt hierbei darin, dass die Leitungsbündel jeweils keinen eigenen Außenmantel benötigen bzw. einen solchen auch nicht aufweisen. Dies spart einerseits unnötiges Gewicht ein und erlaubt eine Reduzierung des Durchmessers der Leitungsbündel. Somit können bei gleichbleibendem Querschnitt der Aufnahme mehr Leitungen eingefügt werden.

Die Erfindung beruht somit u.a. auf der überraschend einfach erscheinenden Erkenntnis, dass eigene Außenmantel, die bei elektrischen Leitungen vor allem zum mechanischen Schutz wegen Norm-Erfordernissen typisch vorgesehen sind, für die gattungsgemäßen Leitungsführungen überflüssig sind. Diese können ohne weiteres durch die Umhüllung selbst gebildet, d.h. ersetzt werden. Somit haben die Leitungsbündel eine gemeinsame Umhüllung und keinen jeweils eigenen, zusätzlichen Außenmantel zwischen den eigentlichen Leitern und der Umhüllung.

Dabei umfasst das mindestens eine Leitungsbündel von zusammenhängenden Leitungen ein Aderbündel aus mindestens zwei verseilten Adern mit jeweils eigener Isolierung.

Insbesondere kann vorgesehen sein, dass insbesondere alle Leitungsbündel keinen eigenen Außenmantel aufweisen.

Es kann vorgesehen sein, dass das Leitungsbündel eine außenseitige Trennlage mit einem gleitfähigen Werkstoff, umfasst, vorzugsweisen einem Werkstoff welche(r) außenseitig ein Fluoropolymer umfasst. Dies erleichtert insbesondere das Einziehen in geschlossen hergestellte (nicht öffenbare Umhüllungen).

Die außenseitige Trennlage kann als Bandierung ausgeführt sein, insbesondere aus Streifen einer PTFE-haltigen Folie bzw. einem PTFE-haltigen Vlies. Eins Bandierung kann mindestens eine Umwicklung, insbesondere zwei gegensinnige Umwicklungen, aufweisen. Es ist z.B. alternativ auch eine Trennlage durch Umlegen mit Folie parallel zur Längsrichtung denkbar.

Bevorzugt umfasst das Leitungsbündel mindestens zwei hochflexible Litzenleitungen, insbesondere Litzenleitungen mit Einzeldrahtdurchmesser < 0,1mm, insbesondere ≤ 0,08mm, und/oder feinstdrähtige Litzenleitungen, was für sehr hohe Lebensdauer bei vielen Biegewechsel vorteilhaft ist.

Es kann vorgesehen sein, dass das Leitungsbündel mindestens zwei Litzenleitungen umfasst die eine Isolierung aus einem Fluorpolymer aufweisen, wie bspw. einem PTFE, PFA, PVDF, ETFE, FEP oder dgl., derartige Isolierungen können eigene Gleitwirkung auch ohne Bandierung bieten, um z.B. das Einziehen zu erleichtern und/oder Abrieb im Inneren zu reduzieren.

Es kann im Leitungsbündel ein zugfestes Kernelement vorgesehen sein, z.B. zum leichteren Einziehen oder aber um einen mittleren Hohlraum bei Verseilung von Bündeln mit 5 oder mehr Adern zu vermeiden.

Das Leitungsbündel kann ein Aderbündel aus mindestens sechs lagenverseilten oder bündelverseilten Adern umfassen.

Im Verfahren mit öffenbaren Umhüllungen kann die geöffnete Umhüllung nach Einbringen der Leitungsbündel anhand der Verschlussprofile staubdicht geschlossen werden.

Es kann vorgesehen sein, dass jede Hülleinheit vorgefertigt ist und zwei beidseitig gegenüberliegende, mit der Hülleinheit einteilige Befestigungsbänder aufweist, umfassend den Schritt die vorgefertigten Hülleinheiten parallel miteinander zu einer Umhüllung zu verbinden.

Weiter bietet die Erfindung den inhärenten Vorteil, jedes Leitungsbündel austauschbar in einer entsprechenden Aufnahme der vorgefertigten Umhüllung eingebracht werden kann.

Ferner kann vorgesehen sein, die vorgefertigte Umhüllung mehrere jeweils mit zusammenwirkenden Verschlussprofilen hergestellte Hülleinheiten, insbesondere im geöffneten Zustand einteilig extrudierte Hülleinheiten, aufweist; und/oder mehrere umfänglichgeschlossen hergestellte Hülleinheiten, insbesondere als geschlossene Profile extrudierte, Hülleinheiten aufweist.

Es kann vorgesehen sein, dass jede Hülleinheit zwei beidseitig gegenüberliegende, mit der Hülleinheiten einteilige Befestigungsbänder aufweisen, mittels welcher benachbarte Hülleinheiten parallel miteinander verbunden sind; und/oder dass die Umhüllung aus Hülleinheiten aus biegeelastischem Kunststoff besteht, wobei jede Hülleinheit einen in Längsrichtung gleichbleibenden Querschnitt hat.

### ZWEITER ASPEKT

Gemäß einem vorteilhaft mit o.g. Aspekten kombinierbaren, nicht beanspruchten Aspekt wird eine neuartige Hülleinheit aus Kunststoff vorgeschlagen, nämlich für eine längliche flexible Umhüllung einer Leitungsführung, wobei die Hülleinheit mindestens eine Aufnahme zur Führung mindestens einer Leitung bildet, welche sich kanalartig in einer Längsrichtung von einem ersten Ende zu einem zweiten Ende erstreckt, und eine Hüllwand aus einem flexiblen Kunststoff aufweist.

Die Hülleinheit umfasst an einer Längsseite ein erstes Befestigungsband und an der anderen Längsseite ein zweites Befestigungsband, wobei die Befestigungsbänder für eine lösbare Verbindung zueinander passend ausgeführt sind und dass die Befestigungsbänder im Vergleich zur Hüllwand biegesteifer ausgeführt sind, wobei die Befestigungsbänder insbesondere einen im Vergleich zur Hüllwand härteren Kunststoff umfassen und/oder insbesondere eine biegesteifere Gestaltung aufweisen.

Diese Gestaltung bietet erheblich Vorteile bei der praktischen Handhabung zur Verbindung und beim Lösen der einzelnen Hülleinheit und erlaubt zudem eine robustere und dennoch zerstörungsfrei lösbare Verbindung.

In einer Weiterbildung ist vorgesehen, dass die Befestigungsbänder einteilig mit der Hüllwand hergestellt sind, aus einem ersten Kunststoff für die Hüllwand und einem härteren zweiten Kunststoff für die Befestigungsbänder, insbesondere im Koextrusionsverfahren oder durch nachträgliches stoffschlüssiges Verbinden der Befestigungsbänder mit der Hüllwand.

Die Hülleinheit kann weiterhin zumindest außenseitig an der Hüllwand und/oder an einem Befestigungsband mindestens eine gleitreibungsmindernde Schicht aufweisen. Hierzu kann insbesondere eine Schicht aus einem dritten Kunststoff mit gegenüber dem ersten und zweiten Kunststoff geringerem Gleitkoeffizienten verwendet werden. Der dritte Kunststoff ist vorzugsweise ein Polyethylen, insbesondere ein PE-HMW oder PE-UHMW.

Der Gleitkoeffizient wird bei Kunststoffen als Messwert gegen gehärteten Stahl mit einer Rautiefe von Rz = 2,4 mm, einer Flächenpressung zwischen 0,15 und 1 MPa und einer Gleitgeschwindigkeit von 0,5 m/s ermittelt.

Die Hülleinheit kann z.B. in einem Tri-Extrusionsverfahren aus drei verschiedenen Kunststoffen hergestellt sein.

Wenn die Befestigungsbänder konjugiert mit männlichem und weiblichem Querschnitt ausgeführt ist kann die gleitreibungsmindernde Schicht zumindest an der Außenseite des weiblichen Befestigungsbands vorgesehen werden.

Ergänzend oder alternativ kann eine gleitreibungsmindernde Schicht zumindest einseitig einen überwiegenden Flächenanteil der Außenfläche der Hüllwand bedecken.

Vorteilhaft ist, wenn die gleitreibungsmindernde Schicht eine Schichtstärke aufweist, die <20% der Stärke der Hüllwand beträgt.

In einer weiteren, besonders bevorzugten Ausführungsform ist die Hülleinheit materialeinheitlich aus einem thermoplastischen Elastomer (TPE) hergestellt, insbesondere aus einem TPS, TPU oder TPO. Die Hülleinheit kann vorzugsweise aus einem für eine Herstellung in einem Heißextrusions-Verfahren geeigneten TPE hergestellt sein.

Zu jeder Aufnahme können zwei in Längsrichtung erstreckte zusammenwirkende Verschlussbänder eines Verschlusses vorgesehen sein, zum staubdichten Schließen eines geöffneten Zustands, in welchem eine Leitung quer zur Längsrichtung in eine der Aufnahmen eingefügt bzw. aus dieser entnommen werden kann.

Bevorzugt sind die Befestigungsbänder in einer Verbindungsrichtung quer zur Längsrichtung miteinander verbindbar ausgeführt, um mehrere Hülleinheiten mit zueinander passenden Befestigungsbändern durch Verbinden der Befestigungsbänder in Verbindungsrichtung quer zur Längsrichtung lösbar aneinander zu Befestigen.

In Kombination mit beiden letztgenannten Gestaltungen ist besonders praktisch in der Handhabung, wenn die Verschlussbänder durch eine Kraft im Wesentlichen senkrecht zur Verbindungsrichtung der Befestigungsbänder schließbar bzw. öffenbar sind.

### WEITERE MERKMALE

Es wird ferner bei einer Leitungsschutzführung vorgeschlagen, dass die Umhüllung, insbesondere seitlich an mindestens einer Aufnahme, mindestens einen oder mehrere in Längsrichtung erstreckte Funktionsbereiche aufweist, welche eine Zusatzfunktion dahingehend bieten, dass die Aufnahmen bedarfsweise geöffnet werden können, oder einzelne Aufnahmen wahlweise komplett mit einer neuen Leitung oder einzelne Hülleinheiten wahlweise komplett mit einem neuen Leitungsstrang ausgetauscht werden können.

Unter einem Leitungsstrang wird dabei ein Bündel von Leitungen verstanden, insbesondere von zusammenhängenden Leitungen. Insbesondere sei an einen teilweisen Austausch einzelner Leitungsstränge gedacht, die von einer oder mehreren Hülleinheiten mit einer oder mehreren Aufnahmen aufgenommen sind.

Dazu kann vorgesehen sein, dass der Funktionsbereich einen Verschluss zum Öffnen und Schließen einer oder mehrerer Aufnahmen bereitstellt, sodass eine oder mehrere Leitungen quer zur Längsrichtung bzw. seitlich/radial, insbesondere ohne Demontage der kompletten Umhüllung, eingefügt bzw. entnommen werden kann. Dazu kann der Funktionsbereich insbesondere zwei zusammenwirkende Verschlussprofile aufweisen, die zum möglichst staubdichten Schließen gestaltet sind und einen geöffneten Zustand der Aufnahme(n) ermöglichen, in welchem eine Leitung quer zur Längsrichtung eingefügt bzw. entnommen werden kann.

Alternativ oder ergänzend ist gemäß dem Grundgedanken nach einem zweiten Aspekt vorgesehen, dass der bzw. ein Funktionsbereich ein Befestigungsband zum bedarfsweise Lösen bzw. Anbringen mindestens eines Teils der Umhüllung bzw. einer Aufnahme, umfasst oder bildet. Das Befestigungsband kann grundsätzlich nach einem beliebigen Verbindungsprinzip, durch Formschluss und/oder Kraftschluss, für eine zerstörungsfrei lösbare Verbindung mit einem entsprechenden Band bzw. zusammenwirkenden Funktionsbereich ausgeführt sein. Das Befestigungsband kann insbesondere als Befestigungsleiste oder Befestigungsprofil ausgeführt sein.

Beide Konzepte zur Funktionserweiterung erlauben gleichermaßen einen nachträglichen Austausch bzw. Nachrüstung mit einer bereits mit Steckverbindern, Kupplungen oder dgl. ausgestatteten Leitung, ohne die Umhüllung insgesamt demontieren zu müssen um ein Austreten von Partikel am Betriebsort, z.B. im Reinraum, zu vermeiden. Im ersten Aspekt kann die Leitung ohne Veränderung an der Umhüllung getauscht werden. Im zweiten Aspekt Fall wird nur ein Teil der Umhüllung mitsamt den betroffenen Leitungen getauscht. Dabei sei sowohl an den Austausch einer einzelnen Aufnahme mit einer oder mehreren Leitungen oder den Austausch einer Hülleinheit mit einem Leitungsstrang gedacht.

Eine Hülleinheit hat jeweils mindestens eine Aufnahme für eine oder mehrere Leitungen bzw. einen Leitungsstrang. Die Aufnahmen können insbesondere rohrförmig ausgeführt sein.

In einer Ausführungsform umfasst die Umhüllung mindestens eine Hülleinheit aus weichelastischem bzw. biegeelastischem Kunststoff, welche vorzugsweise einteilig ausgeführt ist. Die Hülleinheit könnte auch mehrteilig zusammengesetzt sein, z.B. aus zwei symmetrischen Halbhüllen bzw. ähnlich im Längsschnitt geteilten Rohrstücken. Eine einteilige Hülleinheit ist hier bevorzugt und kann z.B. Dichtheit gegen Partikelaustritt verbessern.

In bevorzugter Ausführungsform ist der mindestens eine Funktionsbereich jeweils einteilig mit der Hülleinheit verbunden (soz. nur durch Zerstörung lösbar). Hierzu kann dieser unmittelbar einstückig mit der Hülleinheit hergestellt oder auch separat hergestellt und nachträglich stoffschlüssig durch ein Fügeverfahren mit dieser verbunden sein, z.B. durch ein geeignetes thermisches Fügeverfahren, insbesondere Verschweißung. Im Rahmen einer Ausführung liegt insbesondere eine separate Herstellung eines "vereinfachten Profils" ohne Funktionsbereich einerseits und des Funktionsbereichs andererseits, z.B. jeweils durch Extrudieren aus verschiedenen besonders geeigneten Kunststoffen, insbesondere Thermoplasten. Der Funktionsbereich kann anschließend stoffschlüssig in Längsrichtung mit dem Rest der Hülleinheit zu einem Teil verbunden werden, z.B. durch ein Schweißverfahren zum Verschweißen von Kunststoffen.

In einer Ausführungsform, insbesondere nach dem zweiten Aspekt, wird die Umhüllung aus einer Mehrzahl separater Hülleinheiten zusammengesetzt. Dabei kann jede Hülleinheit jeweils genau eine Aufnahme bilden und jeweils ein mit der Hülleinheit einteiliges seitliches Befestigungsband, z.B. eine Leiste oder ein Profil, aufweisen. Weiterhin kann eine Hülleinheit auch eine Mehrzahl von Aufnahmen umfassen und jeweils ein mit der Hülleinheit einteiliges seitliches Befestigungsband aufweisen. Hierdurch können einzelne Hülleinheiten parallel zu einer Umhüllung miteinander verbunden werden. In einer Weiterbildung hierzu kann jede Hülleinheit zwei beidseitig gegenüberliegende, mit der Hülleinheiten einteilige Befestigungsbänder aufweisen, mittels welcher benachbarte Hülleinheiten parallel miteinander verbindbar sind. Die Befestigungsbänder können zwecks unmittelbarer Zusammenwirkung zueinander passend, z.B. konjugiert bzw. formschlüssig ineinandergreifend, ausgeführt sein. Sie können auch mit einer separaten Befestigungsleiste zusammenwirken, welche zur Befestigung der Hülleinheiten miteinander verwendet wird.

In einer bevorzugen Ausführungsform wird eine Umhüllung von einer Mehrzahl von Hülleinheiten gebildet, welche jeweils gleich viele oder abweichend viele Aufnahmen aufweisen. Optional kann eine einzelne Hülleinheit insbesondere derart viele Aufnahmen aufweisen, dass ein Leitungsstrang von genau einer Hülleinheit aufgenommen werden kann. Somit wird vorteilhaft ermöglicht, dass innerhalb einer Umhüllung einzelne Leitungsstränge durch den Austausch der jeweilig zugehörigen Hülleinheit ausgetauscht werden können. Als Leitungsstrang werden dabei insbesondere Bündel bzw. Gruppen aus funktional zusammengehörenden Leitungen bezeichnet, z.B. gruppiert nach Verschleißanfälligkeit bzw. Lebensdauer.

Jede Hülleinheit kann seitlich, insbesondere dem Befestigungsband gegenüberliegend, zwei mit der Hülleinheit einteilige Verschlussprofile aufweisen.

In einer Ausführungsform kann vorgesehen sein, dass die Verschlussprofile einer Hülleinheit durch Verbinden mit dem Befestigungsband einer benachbarten Hülleinheit form- und/oder kraftschlüssig schließbar sind. Hierdurch kann z.B. bei Übermaß der Verschlussprofile, die in das gegenüberliegende Befestigungsband greifen, ein besonders robuster Verschluss erzielt werden, ohne zusätzlichen Montageschritt. Alternativ können benachbarte Hülleinheiten jeweils durch eine separate, flexible Befestigungsleiste, welche mit den Befestigungsbändern zusammenwirkt, parallel miteinander verbunden werden. So wird das Lösen des Verschlusses (1. Aspekt) von der Befestigung (2. Aspekt) getrennt, d.h. ein Abtrennen einer Hülleinheit kann nicht zum ungewollten Öffnen der angrenzenden Hülleinheit führen, sodass keine Abriebpartikel ungewollt freigesetzt werden.

In einer weiteren Ausführungsform ist vorgesehen, dass die Hülleinheit Unterteilungen umfasst, welche mehrere parallele Aufnahmen bilden und die Hülleinheit einen Verschluss (1. Aspekt) aufweist, insbesondere mindestens zwei mit der Hülleinheit einteilige Verschlussprofile. So kann u.a. der Montageaufwand bei Anwendungen mit einer hohen Anzahl zu führender Leitungen verringert werden, da nicht für jede Leitung eine einzelne zu montierende Hülleinheit vorgesehen wird. In dieser Ausführungsform hat jede Aufnahme vorzugsweise einen zugeordneten eigenen Verschluss, sodass alle Leitungen getrennt zugänglich bleiben. Dazu kann an jeder Aufnahme ein Paar zusammenwirkender Verschlussprofile einteilig mit der Hülleinheit vorgesehen sein.

Bei großen Führungslängen oder besonders weichelastischen Umhüllungen bzw. Hülleinheiten kann in mindestens einer vorzugsweise in zwei seitlich äußeren Aufnahmen eine Stützkette, insbesondere aus einzelnen Kettengliedern, vorgesehen sein, welche ausgeführt ist, um einen Umlenkradius des Umlenkbogens vorzugeben und/oder ein freitragendes Trum in Strecklage zu stützen.

In bevorzugter Ausführungsform ist an jeder Schmalseite der Umhüllung, bei unterteilter Hülleinheit insbesondere jeweils mit dieser einteilig, ein Befestigungsprofil als Befestigungsband vorgesehen. Neben der Erweiterbarkeit kann dadurch bspw. alternativ zu einer Stützkette eine andersartige Stützvorrichtung extern an den Befestigungsprofilen der Umhüllung angebracht werden. Somit wird kein nutzbarer Aufnahmekanal zur Stützfunktion benötigt. Hierzu kann an jeder Schmalseite der Umhüllung jeweils eine externe Stützvorrichtung mit dem Befestigungsprofil verbunden sein die abriebarm ausgeführt ist um einen Umlenkradius des Umlenkbogens vorzugeben und/oder ein freitragendes Trum in Strecklage zu stützen. Bevorzugt hat dazu jede Stützvorrichtung ein Tragband und senkrecht dazu stehende Anschlagelemente, insbesondere T-förmige Anschlagelemente deren T-Arme im Umlenkbogen radial innen bzw. in Strecklage im Anschlag stehen. Das Tragband liegt vorzugsweise auf Höhe der neutralen Faser.

Insbesondere gemäß dem zweiten Aspekt mit Befestigungsfunktion (bzw. ohne Öffnungsfunktion) sieht eine Ausführungsform vor, dass die Umhüllung eine Mehrzahl separater und umfänglich geschlossener Hülleinheiten umfasst. Dabei kann jede Hülleinheit jeweils genau eine Aufnahme bilden. Jede Hülleinheit kann als Funktionsbereiche zur Befestigung zwei beidseitig gegenüberliegende, mit der Hülleinheiten einteilige Befestigungsbänder aufweist. Dabei können die Befestigungsbänder zur formschlüssigen Zusammenwirkung unmittelbar miteinander, z.B. in Art eines Reißverschlusses oder Gleitverschlusses oder dgl. ausgeführt sein, oder mit einer separaten Befestigungsleiste form- und/oder kraftschlüssig zusammenwirken.

Hülleinheiten gemäß jedem der beiden Aspekte, auch mit einer Kombination der Verschluss- und Befestigungsfunktion, können einen in Längsrichtung gleichbleibenden Querschnitt haben. Dies erlaubt eine profilartige Herstellung in einem Extrusionsverfahren, vorzugsweise aus weichelastischem bzw. biegeelastischem Kunststoff. Der Funktionsbereich kann dabei ggf. separat extrudiert werden.

Ein als Verschluss dienender Funktionsbereich lässt sich bspw. in Extrusion herstellen, wenn der Funktionsbereich zwei konjugierte ineinandergreifende in Längsrichtung durchgehende gleichbleibende Verschlussprofile aus Kunststoff aufweist, die als Druckverschluss oder zahnloser Schiebeverschluss zusammenwirken. Dabei kann jedes Verschlussprofil zwei Eingriffsprofile umfassen, und soz. einen Doppelverschluss bilden.

Nach dem zweiten Aspekt können zwei seitlich gegenüberliegende Funktionsbereiche vorgesehen sein, welche jeweils ein Befestigungsprofil aufweisen, wobei die Befestigungsprofile vorzugsweise für eine formschlüssige Verbindung, z.B. eine Feder-Nut-Verbindung oder dgl., ausgeführt sind, die lediglich in Längsrichtung lösbar ist. So kann ein ungewolltes Ablösen von Hülleinheiten im Betrieb vermieden werden.

Vorzugsweise sind benachbarte Aufnahmen parallel miteinander verbunden bzw. gekoppelt durch bandförmige Zwischenbereiche, welche die neutrale Faser vorgeben. Alternativ oder ergänzend liegt bevorzugt zu jedem Verschluss aus zusammenwirkenden Verschlussprofilen die Schnittstelle auf Höhe der neutralen Faser der Umhüllung. Die neutrale Faser soll insbesondere mittig durch den Querschnitt der Aufnahmen verlaufen.

Endseitig können an der Umhüllung Klemmvorrichtungen vorgesehen sein, welche die Umhüllung und ggf. die Leitungen in Axialrichtung gegen Austritt von Staubpartikeln verschließen. Im typischen Anwendungsfall werden mindestens zwei Leitungen, meist eine Vielzahl Leitungen, voneinander getrennt in einer jeweiligen Aufnahme geführt und von der Umhüllung möglichst staubdicht umschlossen. Auch an den stirnseitigen Enden sollen keine Partikel austreten.

Eine Ausführung betrifft auch eine Hülleinheit als Einzelteil zur Herstellung einer Umhüllung. Diese ist aus Kunststoff, insbesondere weichelastischem bzw. biegeelastischem Kunststoff, hergestellt und hat mindestens eine rohrförmige Aufnahme zur Führung mindestens einer Leitung, welche sich kanalartig in einer Längsrichtung von einem ersten Ende zu einem zweiten Ende erstreckt.

Gemäß einer Kombination beider eingangs genannter Aspekte ist vorgesehen, dass die Hülleinheit an einer Längsseite zwei in Längsrichtung erstreckte zusammenwirkende Verschlussprofile umfasst, zum möglichst staubdichten Schließen eines geöffneten Zustands, in welchem eine Leitung quer zur Längsrichtung in die Aufnahme eingefügt bzw. entnommen werden kann und an der anderen Längsseite ein in Längsrichtung erstrecktes Befestigungsband für eine lösbare Verbindung mit einer weiteren Hülleinheit, insbesondere durch Formschluss und/oder Kraftschluss, mit einem entsprechenden Funktionsbereich einer weiteren Hülleinheit umfasst. Die Hülleinheit kann dabei mehrere, insbesondere parallele und rohrförmige, ausgeprägte Aufnahmen zur getrennten Führung von jeweils mindestens einer Leitung bilden oder jeweils genau eine Aufnahme.

In einer Ausführungsform, bei welcher nur der zweite Aspekt (Befestigungsfunktion) vorgesehen wird, hat die Hülleinheit an einer Längsseite ein erstes Befestigungsprofil und an der anderen Längsseite ein zweites Befestigungsprofil, und die Befestigungsprofile für eine lösbare Verbindung durch Formschluss und/oder Kraftschluss zueinander passend ausgeführt sind um mehrere Hülleinheiten mit baugleichen Befestigungsprofilen lösbar aneinander zu Befestigen. Bei baugleichen Befestigungsprofilen sei insbesondere an eine Leiste oder ein Profil gedacht, wobei die Hülleinheit an einer ersten Längsseite eine Leiste und an einer zweiten Längsseite ein Profil aufweisen kann und wobei die Leiste einer ersten Hülleinheit formschlüssig und/oder durch Kraftschluss mit dem Profil einer zweiten Hülleinheit verbunden werden kann. Dabei kann die erste Hülleinheit insbesondere baugleich mit der zweiten Hülleinheit ausgebildet sein oder z.B. eine abweichende Anzahl von Aufnahmen aufweisen.

In einer weiteren Ausführungsform weist die Hülleinheit an einer Längsseite ein erstes Befestigungsprofil und an der anderen Längsseite ein zweites Befestigungsprofil auf, wobei die Befestigungsprofile für eine lösbare Verbindung durch Formschluss und/oder Kraftschluss zueinander passend ausgeführt sind um mehrere baugleiche Hülleinheiten lösbar aneinander zu Befestigen. Weiterhin kann die Hülleinheit mehrere oder genau eine rohrförmige Aufnahme zur getrennten Führung von jeweils mindestens einer Leitung oder eines Leitungsstranges bilden. Diese Ausführungsform ist vorteilhaft, wenn die Hülleinheit in Umfangsrichtung um die Aufnahme geschlossen hergestellt ist, sodass ein Austreten von Partikeln am Betriebsort zuverlässig vermieden wird.

Weitere Einzelheiten und Vorteile der Erfindung lassen sich, ohne Beschränkung der Allgemeinheit des Vorstehenden, der nachfolgenden Erläuterung bevorzugter Ausführungsbeispiele der beigefügten Zeichnungen 1-6 entnehmen. Die Beispiele gemäß den Zeichnungen 7- 12 sind nicht erfindungsgemäß und dienen lediglich der Veranschaulichung. Hierbei zeigen:
- FIG.1A-1B:: ein erstes Ausführungsbeispiel einer verfahrbaren Leitungsschutzführung mit einer flexiblen Umhüllung, in Teilansicht eines Endbereichs, teilweise aufgebrochen (FIG.1A), sowie eine typische Anordnung einer Leitungsschutzführung bzw. Leitungsführungsreinrichtung in schematischer Seitenansicht;
- FIG.2:: eine Verseilung von beispielhaft vier Einzeladern zur einem Leitungsbündel aus zusammenhängenden Leitungen
- FIG.3:: eine Bandierung durch gegensinniges Umwickeln der verseilten Einzeladern nach FIG.2 zur Herstellung eines Leitungsbündels ohne eigenen Außenmantel;
- FIG.4:: schematisch den Verfahrensschritt des Einziehens eines Leitungsbündels nach FIG.3 in eine geschlossen vorgefertigte Hülleinheit zur Herstellung einer Umhüllung für eine staubdichte dynamische Leitungsführung;
- FIG.5A-5B:: als alternative Verfahrensschritte, das seitliche Einlegen eines Leitungsbündels nach FIG.3 in eine öffenbare Hülleinheit (FIG.5B), den geschlossenen Zustand von beispielhaft zwei Hülleinheiten, die nachträglich miteinander verbunden wurden zur Herstellung einer Umhüllung für eine staubdichte dynamische Leitungsführung, zugleich zeigen FIG.5A-5B eine bevorzugte Variante einer öffenbaren bzw. schließbaren, vorgefertigten Hülleinheit;
- FIG.6:: rein schematisch in Perspektivansicht eine Umhüllung hergestellt nach dem Prinzip aus FIG.4 bzw. FIG.5A-5B;
- FIG.7A-7C:: eine bevorzugte Variante einer geschlossen vorgefertigten Hülleinheit (als sog. Einzelpod)
- FIG.8A-8C:: Varianten von Hülleinheiten mit gleitreibungsmindernden Schichten an unterschiedlichen Bereichen der Außenseite;
- FIG.9A-9D:: ein weiteres Ausführungsbeispiel mit einer Hülleinheit, welche mehrere Aufnahmen aufweist und welche durch seitliche Befestigungsprofile lösbar miteinander verbunden sind;
- FIG.10A-10D:: ein besonders bevorzugtes Ausführungsbeispiel mit einer Hülleinheit, welche mehrere Aufnahmen aufweist, die einzeln befüllbar sind, sowie bevorzugter Querschnitte zugehöriger Funktionsbereiche; und
- FIG.11-12:: weitere Ausführungsbeispiele als Varianten zu FIG.10A-10D.

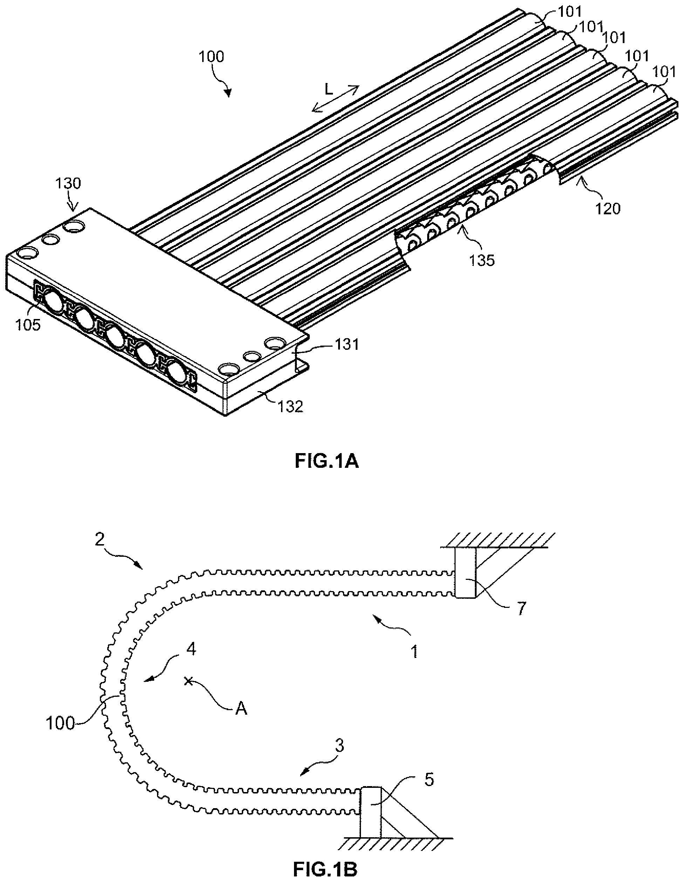

FIG.1A-1B zeigen schematisch ein erstes Ausführungsbeispiel einer hin und her verfahrbaren Leitungsschutzführung für Leitungen (nicht gezeigt). Diese hat eine langgestreckte, flexible Umhüllung 100, die aus einer Mehrzahl einzelner aus Kunststoff hergestellter Hülleinheiten 101 zusammengesetzt ist. Jede Hülleinheit 101 ist aus biegsamen weichelastischem Kunststoff, insbesondere einem Thermoplast, z.B. PE, PU, TPU, PTFE, expandiertes PTFE, PP oder dgl., hergestellt. Jede Hülleinheit 101 hat über ihre Länge einen durchgehend gleichbleibenden Querschnitt (FIG.1B) senkrecht zur Längsrichtung L. Die Hülleinheit 101 kann z.B. preiswert als Strangware in geeigneter Kunststoff-Extrusionstechnik hergestellt und auf eine geeignete Länge, z.B. von ca. 100mmm bis ca. 1500mm, abgelängt werden. Die baugleichen Hülleinheiten 101 bilden im Inneren eine im Wesentlichen zylindrische Aufnahme 102, zum geschützten Führen einer Leitung, und sind dazu rohrförmig mit im Verhältnis zum Querschnitt der Aufnahme 102 dünnwandigen Wandbereichen 103 ausgeführt. Die Aufnahmen 102 der flexiblen Umhüllung 100 sind räumlich voneinander getrennt, sodass kein Abrieb zwischen parallel darin geführten Leitungen entstehen kann.

FIG.1A zeigt weiterhin eine von zwei endseitigen Klemmvorrichtungen 130 mit zwei Klemmteilen 131, 132, zwischen denen alle Hülleinheiten 101 der Umhüllung 100 mitsamt darin geführter Leitungen (nicht gezeigt) endseitig und in Axialrichtung staubdicht abgeschlossen sind, z.B. durch Spannschrauben. Die Klemmvorrichtungen 130 können zugleich eine Zugentlastung der Leitungen (nicht gezeigt) erzielen und in an sich bekannter Bauweise, z.B. ähnlich der hier insoweit einbezogenen Lehre aus DE 10 2012 100 290 B4, ausgeführt sein.

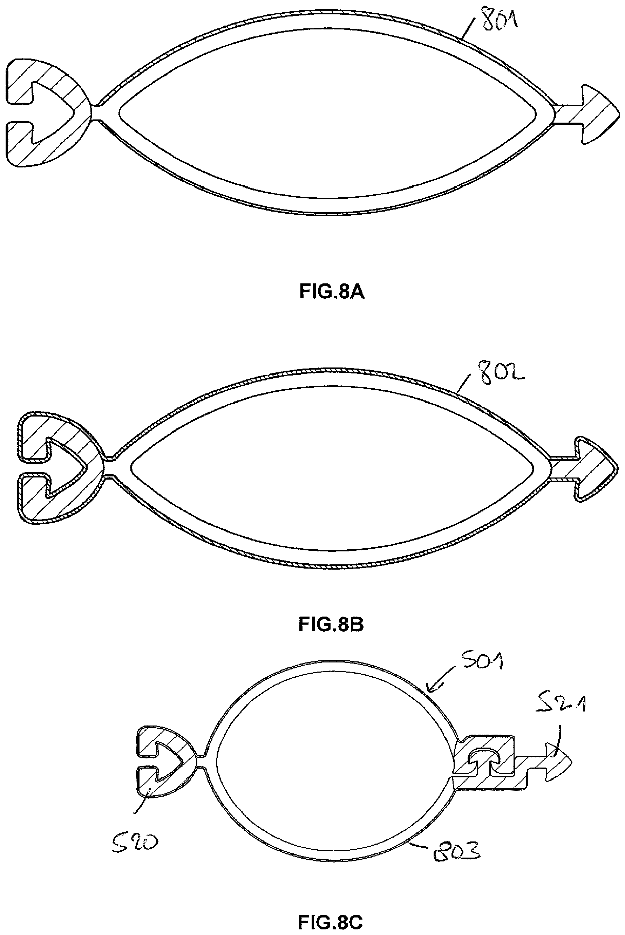

FIG.1A zeigt eine von zwei Stützketten 135 die in den Aufnahmen 102 der beiden seitlich äußeren Hülleinheiten 101 aufgenommen ist und aus einzelnen Kettengliedern besteht. Optionale Stützketten 135 können einerseits zum Schutz gegen Knicken den minimal zulässigen Radius des Umlenkbogens 4 (FIG.8) vorgeben und andererseits durch Anschlagen der Kettenglieder in Strecklage die freitragende Länge der Umhüllung 100 im beweglichen Trum, z.B. im Obertrum 1 (FIG.8), vergrößern.

FIG.1B zeigt schematisch einen Verlauf einer dynamischen Leitungsführung mit staubdichter Umhüllung 100, z.B. nach einer der FIG.1A, die ein bewegliches Obertrum 1 und ein stationäres Untertrum 3 bildet. Dazwischen bildet die Umhüllung 100 einen Umlenkbogen 4 mit vorgegebenem Biegeradius um eine gedachte Achse A. Der Umlenkbogen 4 verfährt über eine Strecke relativ zu einem feststehenden Anschluss 5 wenn der Obertrum 1 mit dem beweglichen Anschluss 7 verfahren wird. Die Raumlage ist jedoch beliebig, die Umhüllung 100 kann auch vertikal oder seitlich verfahren. Die beiden Enden der Umhüllung 100 sind mit staubdicht verschlossen, z.B. mit Klemmvorrichtungen nach FIG.1A. Die Umhüllung 100 ist insgesamt schlauchartig und ausreichend flexibel ausgeführt, u.a. durch geeignete Gestaltung und/oder Materialwahl, um eine reversibel biegsame Krümmung des Umlenkbogens 4 mit geringem Kraftaufwand zu erlauben und der Fahrbewegung des beweglichen Anschluss 7 mit möglichst geringem Widerstand zu folgen.

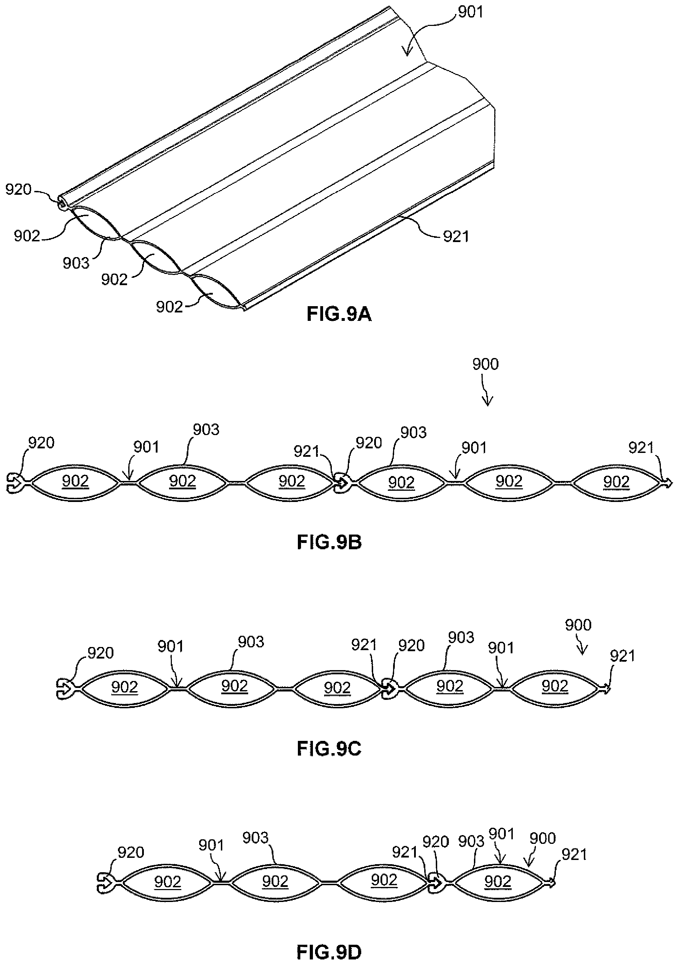

FIG.9A-9D zeigen schematisch eine Umhüllung 900, die aus einer Mehrzahl einzelner Hülleinheiten 901 aufgebaut ist. Die Hülleinheiten 901 bilden jeweils eine oder mehrere Aufnahmen 902. Im Gegensatz zu FIG.1-6 sind die Hülleinheiten 901 in Längsrichtung L und in Umfangsrichtung geschlossen, d.h. mit unterbrechungsfrei um die eine oder mehrere Aufnahmen 902 umlaufender Hüllwand 903 ausgeführt. Die Hüllwand 903 ist bspw. in Rohrform, Schlauchform oder dgl. mit etwa linsenförmigem (Engl. lens-shaped) bzw. spitzovalem (Engl. vesica piscis / doublepointed oval), oder auch ovalem, langrundem oder rundem Querschnitt ausgeführt. Bevorzugt wird der linsenförmige Querschnitt nach FIG.9A-9D zur Gestaltung der Aufnahmen 902 verwendet. Dieser kann insbesondere aus zwei gleichen Kreissegmenten gebildet sein, welche an ihren Sehnen symmetrisch zur neutralen Faser zusammengesetzt sind. Diese Querschnittsform mindert Faltenbildung d.h. Abrieb im Umlenkbogen. Die Hülleinheiten 901 sind zumindest überwiegend aus flexiblem, dauerelastisch biegsamen Kunststoff hergestellt, insbesondere extrudiert, z.B. aus expandiertem PTFE.

Hülleinheiten 901 nach FIG.9A-9D können nicht zerstörungsfrei geöffnet werden, d.h. Leitungen müssen, anders als bei FIG.1-6, axial bzw. in Längsrichtung durchgeführt werden. Ein ungewolltes Austreten von Partikeln während Wartungsarbeiten kann dadurch aber zuverlässig vermieden werden. Eine Vereinfachung der Wartung und Erweiterbarkeit wird mit den Hülleinheiten 901, ohne Verschlussfunktion an den Aufnahmen 902, allein durch das Konzept der Befestigungsfunktion bzw. die zur parallelen Befestigung einzelner Hülleinheiten 901 zusammenwirkenden Funktionsbereiche 920, 921 erzielt. Hierbei kann jede Hülleinheit 901 z.B. einen zusammengehörenden Leitungsstrang aufweisen, um ein mit Steckern oder dgl. vorkonfektionierten Leitungsstrang unabhängig von einem abweichenden Leitungsstrang mittels Austausch einer Hülleinheit 901 zu erneuern.

Jede Hülleinheit 901 nach FIG.9A-9D hat beidseitig diametral gegenüberliegende und mit der geschlossenen Hüllwand 903 entweder einteilig hergestellte oder nachträglich mit dieser verbundene und in Längsrichtung L durchgehend erstreckte Funktionsbereiche 920, 921. Die Funktionsbereiche 920, 921 weisen jeweils als Befestigungsband ein Befestigungsprofil und/oder eine Befestigungsleiste für eine lösbare Verbindung durch Formschluss und/oder Kraftschluss auf. Die Funktionsbereiche 920, 921 sind zusammenwirkend ausgeführt, zum bedarfsweise Lösen bzw. Anbringen einer Hülleinheit 901 an bzw. von einer angrenzenden Hülleinheit 901. Eine geeignete Bauweise wird zu FIG.10A-10D unten erläutert.

FIG.9B-9D zeigen beispielhaft zwei verbundene Hülleinheiten 901, wobei eine erste Hülleinheit 901 drei Aufnahmen 902 bildet. In FIG.9B weist eine zweite Hülleinheit 901 ebenfalls drei Aufnahmen 902 auf. In FIG.9C weist die zweite Hülleinheit 901 zwei Aufnahmen 902 und in FIG.9D eine Aufnahme 902 auf. Durch verschiedene Anzahl von Aufnahmen 902, welche von einer Hülleinheit 901 gebildet werden, wird eine Anpassung einer Hülleinheit 901 an einen Leitungsstrang (nicht abgebildet) möglich, insbesondere an die Anzahl der Leitungen (nicht abgebildet) innerhalb eines Leitungsstrangs (nicht abgebildet). So wird durch eine bedarfsgerechte Konfiguration von Hülleinheiten 901 mit angepasster Anzahl von Aufnahmen 902 innerhalb einer Umhüllung 900 ermöglicht, dass ein einzelner Leitungsstrang (nicht abgebildet) bedarfsgerecht durch den Austausch einer Hülleinheit 901 ausgetauscht werden kann.

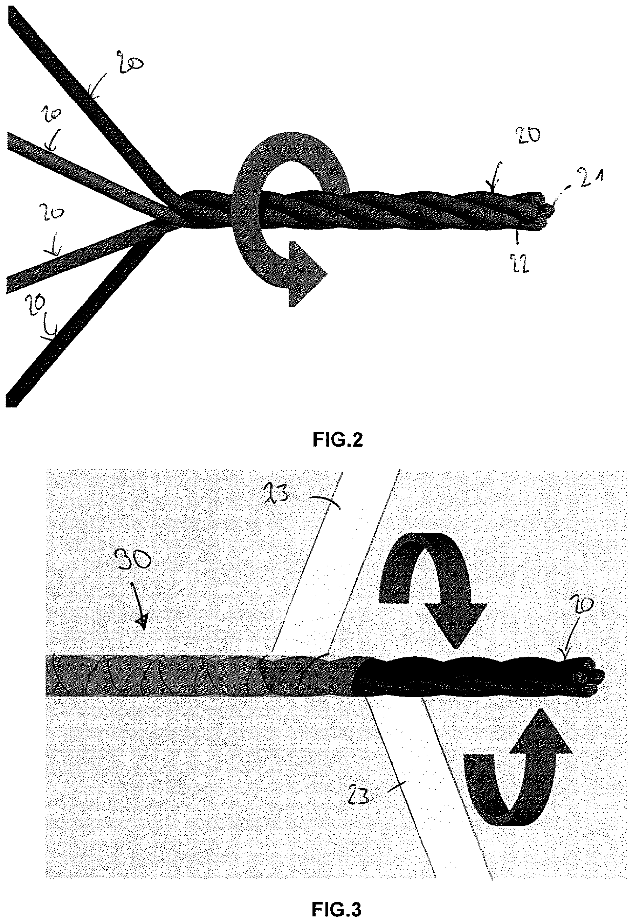

Es können z.B. Befestigungsprofile als Funktionsbereiche 920, 921 verwendet werden, die in Längsrichtung L gleichbleibenden Querschnitt haben, um eine Extrusion zu ermöglichen. Die Funktionsbereiche 920, 921 verlaufen auch hier bandförmig in einer Ebene gegenüberliegend an zwei Seiten entlang der Hüllwand 903. Die Befestigungsbänder der Funktionsbereiche 920, 921 sind in Art eines Druckverschlusses mit ineinandergreifenden Befestigungsprofilen, ähnlich z.B. Druckverschlussbeuteln, ausgeführt. Die Funktionsbereiche 920, 921 wirken hier zur Befestigung zusammen ggf. auch mit einer separaten Befestigungsleiste, wie in FIG.2, welche die Befestigungsprofile bzw. Befestigungsleiste verbindet.

Bevorzugt werden die Funktionsbereiche 920, 921 einstückig mit den Hüllwänden 903 im Extrusionsverfahren hergestellt, entweder materialeinheitlich oder aus verschiedenen Kunststoffen, z.B. mit einem flexiblen aber festerem bzw. härterem Kunststoff für die Funktionsbereiche 920, 921. Die Funktionsbereiche 920, 921 können separat, z.B. durch Extrusion oder Spritzguss hergestellt und einteilig mit dem restlichen Profil der Hülleinheit 901 verbunden werden, z.B. in geeigneter Technik in Längsrichtung durchgehend angeschweißt werden. Bevorzugt sind dazu die Hüllwand 903 und die Funktionsbereiche 920, 921 aus einem Thermoplast hergestellt.

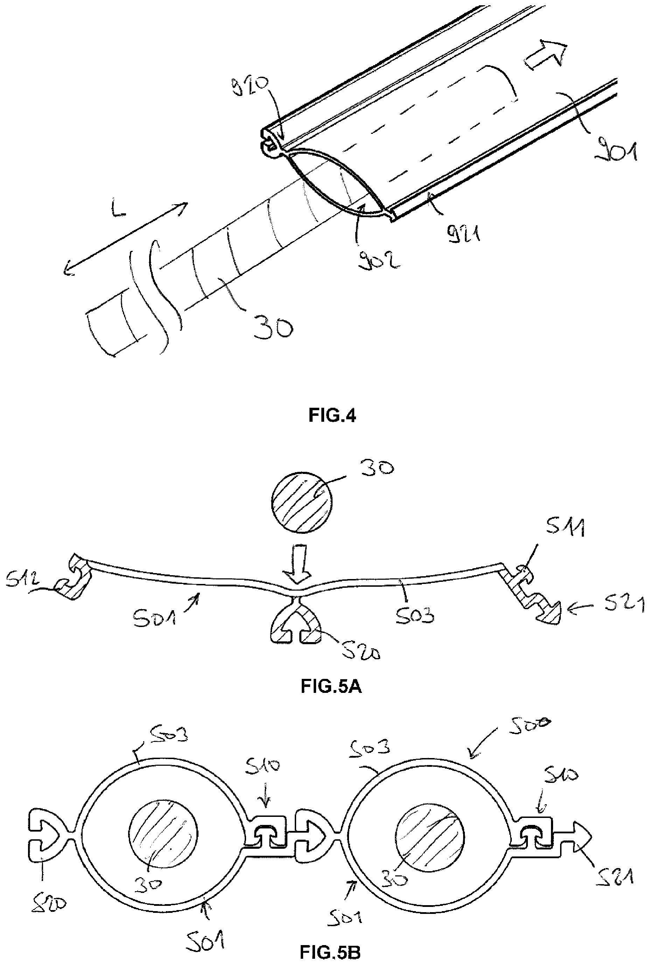

FIG.10A-10D zeigen ein besonders bevorzugtes weiteres Beispiel einer Hülleinheit 1001, welche eine Variante des Prinzips aus FIG.4A-4D darstellt. Die Hülleinheit 1001 ist auch hier aus flexiblem biegsamen Kunststoff hergestellt, vorzugsweise extrudiert und hat mehrere, z.B. drei Aufnahmen 1002 für Leitungen 6 im geschlossenen Zustand (FIG.10B). Dabei hat die Hülleinheit 1001 für jede Aufnahme 1002 eine jeweils eigene bzw. zugeordneten 1010 Funktionsbereich, der als Verschluss ausgeführt ist, hier insbesondere als bandartige Verschlussleiste mit zwei konjugiert ineinandergreifenden Verschlussprofilen bzw. Eingriffsprofilen, nämlich einem Hakenprofil 1011, das in ein Klauenprofil 1012 eingreifen kann. Das Hakenprofil 1011 und das Klauenprofil 1012 sind jeweils mit mindestens einer Hinterschneidung, vorzugweise zwei symmetrischen Hinterschneidungen versehen und greifen mit Widerhaken-Funktion ineinander, d.h. sind relativ leicht zu schließen bzw. verbinden aber nur mir deutlich höherem Kraftaufwand zu lösen.

Weiterhin hat die Hülleinheit 1001 an beiden gegenüberliegenden Schmalseiten ebenfalls jeweils einen Funktionsbereich 1020 bzw. 1021 der zur modularen Befestigung mehrerer Hülleinheiten 1001 mit entsprechend baugleichen Funktionsbereichen 1020 bzw. 1021 in einer Lage seitlich nebeneinander oder an einer Stützvorrichtung (vgl. FIG.3A) dient. Die Befestigungsbänder bzw. -streifen 1020, 1021 sind hier ebenfalls als Klauenprofil 1022 bzw. Hakenprofil 1025 ähnlich oder baugleich den Verschluss-Funktionsbereichen 1010 ausgeführt.

FIG.10C-10D zeigen schematische vergrößerte Querschnittsdarstellungen des Hakenprofils 1011 bzw. des Klauenprofils 1012, welche baugleich auch für die Verschluss-Funktionsbereiche 1020 bzw. 1021 verwendbar sind. Das Hakenprofil 1011 und das Klauenprofil 1012 haben in Längsrichtung (senkrecht zur Ebene der FIG.10C-10D) durchgehend gleichbleibenden Querschnitt und sind als flexible Streifen bzw. Bänder ausgeführt, die im Umlenkbogen 4 (FIG.4) um die Achse A biegsam sind. Das Hakenprofil 1011 ist bzgl. der neutralen Faser N als symmetrisches Doppelhaken-Profil ausgeführt, z.B. wie hier gezeigt in Pfeilkopf-Form, Pilzkopf-Form oder dgl. und weist jeweils entsprechende rückseitige Hinterschneidungen bzw. Hinterschnitte auf. Die Rückseiten 1027 können gegenüber der Symmetrieebene und der Verbidungsrichtung schräg in einem Winkel nach hinten verlaufen, um die Wirkung als Widerhaken zu verstärken bzw. ungewolltes Lösen zuverlässig zu vermeiden. Das Klauenprofil 1012 ist entsprechend im Querschnitt symmetrisch zur neutralen Faser N. Das Klauenprofil 1012 hat eine innere Aufnahme passend bzw. konjugiert zum Hakenprofil 1011 mit passendem Querschnitt und Hinterschneidungen, wobei die Aufnahme mit Untermaß ausgeführt sein kann um Kraftschluss zu erzielen. Um diese Aufnahme bildet das Klauenprofil 1012 zwei klauenartige Leisten bzw. Streifen, welche wie ein Fangmaul das Hakenprofil 1011 hintergreifen und festhalten. Auch andere Bauformen eines Hakenprofils 1011 bzw. eines Klauenprofils 1012 insbesondere wie bei zahnlosen Reißverschlüssen, insbesondere Gleit- oder Druckverschlüssen, aus Kunststoff bekannt kommen in Betracht. Die vorstehende Bauweise ist sinngemäß für die Befestigungs-Funktionsbereiche 1020, 1021 anwendbar. Bevorzugt werden Reißverschlüsse 1010 bzw. 1020, 1021 mit ineinandergreifenden Teilen, die einen im Wesentlichen gleichmäßigen Querschnitt über ihre gesamte Länge aufweisen und ohne Schieber bedient werden, da diese Bauform einfach im Extrusionsverfahren realisierbar ist.

Eine Anordnung der Verschluss-Funktionsbereiche 1010 und Befestigungs-Funktionsbereiche 1020 bzw. 1021 auf Höhe der neutralen Faser N wie in FIG.10A-10D ist besonders vorteilhaft. Die neutrale Faser N, auch Nulllinie genannt, ist die Schicht des Querschnitts, deren Länge sich bei Biegung, insbesondere beim Verfahren des Umlenkbogens 4 (FIG.8) nicht ändert, d.h. die bei Krümmung eine konstante Abmessung in Längsrichtung erhaltende Schicht.

Die Verschluss-Funktionsbereiche 1010 und Befestigungs-Funktionsbereiche 1020 bzw. 1021 können materialeinheitlich mit den Wänden der Aufnahmen 1002 hergestellt sein oder aus einem vergleichsweise biegesteiferen Kunststoff z.B. im Koextrusionsverfahren, bspw. um die Stabilität der Verbindungen und der Hülleinheit 1001 insgesamt zu erhöhen.

FIG.11 zeigt eine Abwandlung mit einer Hülleinheit 1101, bei welcher die Befestigungs-Funktionsbereiche 1120 bzw. 1121 nach dem Prinzip aus FIG.10A-10D ausgeführt sind. Die Verschluss-Funktionsbereiche 1110 hingegen sind als Doppelhaken-Eingriffsprofile nach dem Prinzip aus FIG.4A-4C ausgeführt. Hierbei ist anzumerken, dass die Darstellung in FIG.4A-4C nicht maßstabgetreu ist, da die Verschluss-Funktionsbereiche 410 dort stark vergrößert dargestellt sind. Typisch weisen die Funktionsbereiche 1010, 1020 bzw. 1021 oder 1110, 1120 bzw. 1121 eine Bauhöhe im Querschnitt im Millimeterbereich, z.B. von 1,5mm bis ca. 3mm auf.

FIG.12 zeigt wiederum eine Abwandlung gegenüber FIG.10A-10D mit dem wesentlichen Unterschied, dass jede Hülleinheit 1201 aus FIG.12 genau eine Aufnahme bildet, die einzeln öffenbar und verschließbar ist. Nebst einem entsprechenden Verschluss-Funktionsbereich 1210, mit Hakenprofil 1212 und Klauenprofil 1212 analog zu FIG.10A-10D, an jeder Aufnahme hat in FIG.12 jede einzelne Aufnahme auch beidseitig an jeder Schmalseite ein eigenes Befestigungsprofil, z.B. ein Klauenprofil 1222 bzw. ein Hakenprofil 11225.

Zurückkommend auf FIG.2-6 wird nun ein bevorzugtes Herstellungsverfahren für eine Flachbandleitung vorgeschlagen, welche als Leitungsführung für eine Reinraumanwendung gemäss FIG.1A-1C verwendbar ist.

FIG.2-3 zeigen mehrere Einzeladern 20, bestehend aus hochflexibler Litzenleitung mit Einzeldrahtdurchmesser ≤ 0,08mmn der Einzeldrähte 21 jeder Litze. Die Einzeladern 20 werden auf an sich bekannte Art und Weise verseilt, wobei u.a. die Schlaglänge auf die Litzenleitungen angepasst wird. Jede Litze hat eine eigene geeignete Isolierung 22 Das verseilte Gebilde aus Einzeladern 20 (rechts in FIG.2) wird anschließend bandiert, vorzugsweise mit einer Umwicklung aus zwei Bänden bzw. Streifen aus einer PTFE-Folie 23 die gegensinnig gewickelt werden, wie FIG.3 (rechts) veranschaulicht.

Das resultierende Leitungsbündel 30 (links in FIG.3) besitzt keinen eigenen Außenmantel und kann z.B. durch Zukauf von einem Kabelhersteller bereitgestellt werden. Die Technik zur Fertigung solche Leitungsbündel 30 (links in FIG.3) ist an sich bekannt, es wird jedoch - abweichend von den einschlägigen Normen - hier bewusst kein Außenmantel vorgesehen, welcher typisch im Anschluss durch Extrusion auf das Leitungsbündel 30 aufgebracht würde. Das Leitungsbündel kann weiter hier nicht gezeigte Bestandteile haben, wie z.B. ein Geflecht zur Abschirmung Schirmung, ein zugfestes Kernelement usw.

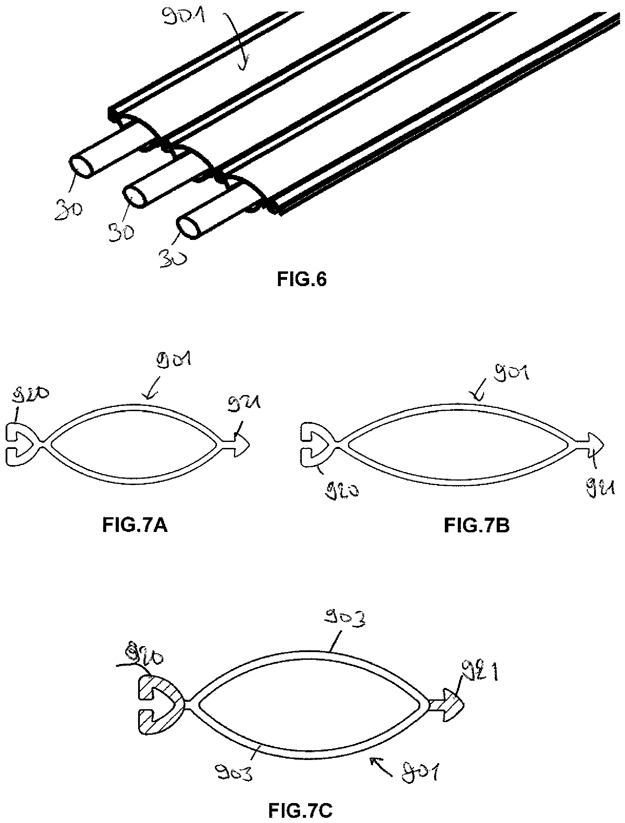

FIG.4 zeigt einen von zwei Schritten zur Herstellung einer Leitungsführung für eine Reinraumanwendung im Sinne der Erfindung. Gemäß FIG.4 wird eine vorgefertigte Umhüllung, hier beispielhaft aus mehreren Hülleinheiten 901, wie oben zu FIG.9A-9C beschreiben, bereitgestellt. Die vorgefertigte Umhüllung 900 hat somit mindestens eine umfänglich geschlossen hergestellte Hülleinheit 901 mit einer oder mehreren Aufnahmen 902. Bei geschlossen hergestellten Hülleinheit 901 wird das Leitungsbündel 30 lose bzw. mit Freiraum zu den Hüllwänden 903, in Längsrichtung L in die geschlossene Hülleinheit eingezogen, z.B. mit Zugdraht oder einer geeigneten Technik. Die Hülleinheiten 901 können anschließend oder zuvor zu einer Umhüllung 900 verbunden werden (vgl. FIG.9A-9D), sodass eine Leitungsführung mit mehreren elektrischen Leitungen 30 wie in FIG.6 schematisch gezeigt hergestellt wird.

Alternativ kann, wie FIG.5A-5B veranschaulichen, auch eine öffenbare und schließbare Hülleinheit 501 mit zwei zusammenwirkenden Verschlussprofilen 511, 512 eines Verschlusses verwendet werden. In Abwandlung zu Fig.11 ist hier ein Verschluss 510 gezeigt mit nur einer ineinandergreifenden Profileiste, sonstige Merkmale sind jedoch gleichwertig zu FIG.11.

Der Verschluss 510 dient zum staubdichten Schließen eines geöffneten Zustands, in welchem die Hülleinheit 501 durch Extrusion hergestellt sein kann.

Im Herstellverfahren nach, FIG.5A-5B, wird ein nach FIG.2-3 bereitgestelltes z.B. zugeliefertes Leitungsbündel 30 quer zur Längsrichtung in die geöffnete Hülleinheit 501 eingefügt und anschließend wird die Hülleinheit 501 geschlossen wie FIG.5A-5B zeigen. Auch auf diese Weise kann eine Leitungsführung mit mehreren elektrischen Leitungen 30, wie in FIG.5B schematisch für nur zwei Leitungen 30 gezeigt hergestellt werden. Die Hülleinheiten 501 können anschließend oder zuvor zu einer Umhüllung 500 verbunden werden (vgl. FIG.5B).

FIG.7A-7B zeigen in vergrößerter Darstellung zwei Varianten der in FIG.4 verwendeten bevorzugten Hülleinheiten 901, bei denen die umlaufende Hüllwand 903 materialeinheitlich mit den Funktionsbereichen 920, 921 zur seitlichen Befestigung hergestellt sind. FIG.7C zeigt eine Variante bei welcher die Funktionsbereiche 920, 921 - wie in FIG.9-10 beschrieben geformt - hingegen aus einem härteren anderen Kunststoff hergestellt sind als die Hüllwand 903.

FIG.8A-8C zeigen gleitreibungsmindernde Schichten aus einem dritten Kunststoff, insbesondere einem PE-HMW oder PE-UHMW, mit gegenüber dem ersten und zweiten Kunststoff (FIG.7C) geringerem Gleitkoeffizienten. Diese Herstellung kann z.B. in einem Tri-Extrusionsverfahren aus drei verschiedenen Kunststoffen erfolgen. In Fig.8A ist die gleitreibungsmindernde Schicht 801 lediglich außen an den Hüllwänden 903 vorgesehen.

In FIG.8B ist eine gleitreibungsmindernde Schicht 802 vollumlaufend auch auf den Funktionsbereichen 920, 921 zur seitlichen Befestigung vorgesehen.

FIG.8C zeigt eine Variante zu Fig.5A-5B mit gleitreibungsmindernde Schicht 803 fast vollumlaufend, jedoch nicht an den männlichen hakenförmigen Verbindern 521. Eine weitere gleitreibungsmindernde Schicht, insbesondere einem PE-HMW oder PE-UHMW, kann auch an der Innenseite der Aufnahmen (nicht in FIG.8A-8C gezeigt), d.h. an der der Leitung 30 zugewandten Seite der Hüllwände 503 bzw. 903 vorgesehen werden.

## Patentansprüche

1. Verfahren zur Herstellung einer Leitungsführung für eine Reinraumanwendung, mit elektrischen Leitungen und mit einer länglichen, flexiblen Umhüllung (100; 500; 900) die hin- und hergehend, insbesondere unter Bildung eines Umlenkbogens (4) zwischen zwei Trumen (1, 3), verfahrbar ist, wobei die flexible Umhüllung (100; 500; 900) eine Anzahl paralleler Aufnahmen (902; 1002; 1102) für jeweils mindestens eine Leitung aufweist, wobei jede Aufnahme (902; 1002; 1102) sich kanalartig in einer Längsrichtung (L) von einem ersten Ende zu einem zweiten Ende erstreckt; das Verfahren umfassend zumindest die Schritte:
- Bereitstellen von mindestens einem Leitungsbündel (30) von zusammenhängenden Leitungen; und
- Bereitstellen der flexiblen Umhüllung (100; 500; 900);
wobei die Umhüllung (100; 500; 900) vorgefertigt ist und das Leitungsbündel (30) in eine Aufnahme (902; 1002; 1102) der vorgefertigten Umhüllung (100; 500; 900) eingebracht wird, wobei das mindestens eine Leitungsbündel (30) von zusammenhängenden Leitungen ein Aderbündel aus mindestens zwei verseilten Adern (20) mit jeweils eigener Isolierung (22) umfasst, wobei das mindestens eine Leitungsbündel (30) keinen jeweils eigenen Außenmantel aufweist, und wobei
- die vorgefertigte Umhüllung (100; 500) mindestens eine Hülleinheit (101; 501) mit zwei zusammenwirkenden Verschlussprofilen (511, 512) eines Verschlusses (510) umfasst zum staubdichten Schließen eines geöffneten Zustands und das Leitungsbündel (30) quer zur Längsrichtung (L) in die geöffnete Umhüllung (100; 500) eingefügt wird;
oder
- die vorgefertigte Umhüllung (900) mindestens eine umfänglich geschlossen hergestellte Hülleinheit (901) umfasst und das Leitungsbündel (30) in Längsrichtung (L) in die geschlossene Hülleinheit (901) eingezogen wird.

2. Verfahren nach Anspruch 1, **dadurch gekennzeichnet, dass** das Leitungsbündel (30) eine außenseitige Trennlage (23) mit einem gleitfähigen Werkstoff umfasst, vorzugsweise einem Werkstoff welche(r) außenseitig ein Fluoropolymer umfasst.

3. Verfahren nach Anspruch 2, **dadurch gekennzeichnet, dass** die außenseitige Trennlage (23) als Bandierung ausgeführt ist, insbesondere aus Streifen einer PTFE-haltigen Folie (23) bzw. eines PTFE-haltigen Vlieses, wobei die Bandierung vorzugsweise mindestens eine Umwicklung, insbesondere zwei gegensinnige Umwicklungen, aufweist.

4. Verfahren nach einem der Ansprüche 1 bis 3, **dadurch gekennzeichnet,**
- **dass** das Leitungsbündel (30) mindestens zwei hochflexible Litzenleitungen umfasst, insbesondere Litzenleitungen mit Einzeldrahtdurchmesser < 0,1mm, insbesondere ≤ 0,08mm, und/oder feinstdrähtige Litzenleitungen; und/oder
- **dass** das Leitungsbündel (30) mindestens zwei Litzenleitungen umfasst die eine Isolierung (22) aus einem Fluorpolymer aufweisen, wie bspw. einem PTFE, PFA, PVDF, ETFE, FEP oder dgl.; und/oder
- **dass** das Leitungsbündel (30) ein zugfestes Kernelement hat.

5. Verfahren nach einem der Ansprüche 1 bis 4, **dadurch gekennzeichnet**, das Leitungsbündel (30) ein Aderbündel aus mindestens sechs lagenverseilten oder bündelverseilten Adern (20) umfasst.

6. Verfahren nach einem der Ansprüche 1 bis 5, **dadurch gekennzeichnet, dass** die geöffnete Umhüllung (100; 500) nach Einbringen der Leitungsbündel (30) anhand der Verschlussprofile (511, 512) staubdicht geschlossen wird.

7. Verfahren nach einem der Ansprüche 1 bis 6, **dadurch gekennzeichnet, dass** jede Hülleinheit (101; 501; 901) vorgefertigt ist und zwei beidseitig gegenüberliegende, mit der Hülleinheit (101; 501; 901) einteilige Befestigungsbänder (520, 521; 920, 921) aufweist, umfassend den Schritt die vorgefertigten Hülleinheiten (101; 501; 901) parallel miteinander zu einer Umhüllung (100; 500; 900) zu verbinden.

8. **Leitungsführung** für Leitungen, wie z.B. Kabel, Schläuche oder dergleichen, insbesondere für eine Reinraumanwendung, mit einer länglichen, flexiblen Umhüllung (100; 500; 900) die hin- und hergehend, insbesondere unter Bildung eines Umlenkbogens (4) zwischen zwei Trumen (1, 3), verfahrbar ist, und mehrere Aufnahmen (902; 1002; 1102) für jeweils mindestens eine Leitung aufweist, wobei jede Aufnahme (902; 1002; 1102) sich kanalartig in einer Längsrichtung (L) von einem ersten Ende zu einem zweiten Ende erstreckt;
wobei die Umhüllung (100; 500; 900) separat vorgefertigt ist und in zumindest einigen Aufnahmen (902; 1002; 1102) jeweils ein Leitungsbündel (30) eingebracht ist, wobei mindestens ein Leitungsbündel (30) von zusammenhängenden Leitungen ein Aderbündel aus mindestens zwei verseilten Adern (20) mit jeweils eigener Isolierung (22) umfasst, wobei das mindestens eine Leitungsbündel (30) keinen jeweils eigenen Außenmantel aufweist, und wobei die Umhüllung (100; 500; 900) den Außenmantel der Leitungsbündel (30) bildet.

9. Leitungsführung nach Anspruch 8, **dadurch gekennzeichnet,**
**dass** jedes Leitungsbündel von zusammenhängenden Leitungen ein Aderbündel aus mindestens zwei verseilten Adern mit jeweils eigener Isolierung umfasst und jedes Leitungsbündel (30) keinen jeweils eigenen Außenmantel aufweist.

10. Leitungsführung nach Anspruch 8 oder 9, **dadurch gekennzeichnet, dass** das Leitungsbündel (30) eine außenseitige Trennlage (23) mit einem gleitfähigen Werkstoff umfasst, vorzugsweise einem Werkstoff welche(r) außenseitig ein Fluoropolymer umfasst.

11. Leitungsführung nach Anspruch 10, **dadurch gekennzeichnet, dass** die außenseitige Trennlage als Bandierung ausgeführt ist, insbesondere aus Streifen einer PTFE-haltigen Folie (23) bzw. eines PTFE-haltigen Vlieses, wobei die Bandierung vorzugsweise mindestens eine Umwicklung, insbesondere zwei gegensinnige Umwicklungen, aufweist.

12. Leitungsführung nach einem der Ansprüche 8 bis 11, **dadurch gekennzeichnet,**
- **dass** das Leitungsbündel (30) mindestens zwei hochflexible Litzenleitungen umfasst, insbesondere Litzenleitungen mit Einzeldrahtdurchmesser < 0,1mm, insbesondere ≤ 0,08mm, und/oder feinstdrähtige Litzenleitungen; und/oder
- **dass** das Leitungsbündel (30) mindestens zwei Litzenleitungen umfasst die eine Isolierung aus einem Fluorpolymer aufweisen, wie bspw. einem PTFE, PFA, PVDF, ETFE, FEP oder dgl. ; und/oder
- **dass** das Leitungsbündel (30) ein zugfestes Kernelement hat.

13. Leitungsführung nach einem der Ansprüche 8 bis 12, **dadurch gekennzeichnet**, das Leitungsbündel (30) ein Aderbündel aus mindestens sechs lagenverseilten oder bündelverseilten Adern (20) umfasst.

14. Verfahren nach einem der Ansprüche 1 bis 7 oder Leitungsführung nach einem der Ansprüche 8 bis 13, **dadurch gekennzeichnet, dass** jedes Leitungsbündel (30) austauschbar in einer entsprechenden Aufnahme (902; 1002; 1102) der vorgefertigten Umhüllung (100; 500; 900) eingebracht ist.

15. Verfahren nach einem der Ansprüche 1 bis 7 oder Leitungsführung nach einem der Ansprüche 8 bis 13, **dadurch gekennzeichnet, dass** die vorgefertigte Umhüllung (500; 900)
- mehrere jeweils mit zusammenwirkenden Verschlussprofilen (511, 512) hergestellte Hülleinheiten (501), insbesondere im geöffneten Zustand einteilig extrudierte Hülleinheiten (501), aufweist; und/oder
- mehrere umfänglich geschlossen hergestellte Hülleinheiten (901), insbesondere als geschlossene Profile extrudierte, Hülleinheiten (901) aufweist; und/oder
- jede Hülleinheit (501; 901) zwei beidseitig gegenüberliegende, mit der Hülleinheit (501; 901) einteilige Befestigungsbänder (520, 521; 920, 921) aufweist, mittels welcher benachbarte Hülleinheiten (501; 901) parallel miteinander verbunden sind;
und/oder
- die Umhüllung (500; 900) aus Hülleinheiten (501; 901) aus biegeelastischem Kunststoff besteht, wobei jede Hülleinheit (501; 901) einen in Längsrichtung (L) gleichbleibenden Querschnitt hat.

16. Leitungsführung für eine Reinraumanwendung hergestellt durch das Verfahren nach einem der Ansprüche 1 bis 7.

## Claims

1. A method for the production of a line guide for a clean room application, with electric lines and an elongate flexible enclosure (100; 500; 900) which is reciprocatingly displaceable in particular with the formation of a direction-changing arc (4) between two runs (1, 3), wherein the flexible enclosure (100; 500; 900) has a number of parallel receiving means (902; 1002; 1102) for at least one respective line, wherein each receiving means (902; 1002; 1102) extends passage-like in a longitudinal direction (L) from a first end to a second end; the method including at least the steps:
- providing at least one line bundle (30) of interrelated lines; and
- providing the flexible enclosure (100; 500; 900);
wherein the enclosure (100; 500; 900) is prefabricated and the line bundle (30) is introduced into a receiving means (902; 1002; 1102) of the prefabricated enclosure (100; 500; 900), wherein the at least one line bundle (30) of interrelated lines includes a wire bundle comprising at least two twisted wires (20) each having its own insulation (22), wherein the at least one line bundle (30) does not have its own respective outer sheath, and wherein
- the prefabricated enclosure (100; 500) comprises at least one enclosure unit (101; 501) having two cooperating closure profiles (511, 512) of a closure (510) for dust-tightly closing an opened state and the line bundle (30) is introduced transversely to the longitudinal direction (L) into the opened enclosure (100; 500); or
- the prefabricated enclosure (900) includes at least one enclosure unit (901) which is produced peripherally closed and the line bundle (30) is drawn into the closed enclosure unit (901) in the longitudinal direction (L).

2. A method according to claim 1 **characterised in that** the line bundle (30) includes an outward separating layer (23) comprising a slidable material, preferably a material which at its outside includes a fluoropolymer.

3. A method according to claim 2 **characterised in that** the outward separating layer (23) is in the form of banding, in particular strips of a PTFE-bearing film (23) or a PTFE-bearing non-woven fabric, wherein the banding preferably has at least one wrapping, in particular two wrappings in opposite directions.

4. A method according to one of claims 1 to 3 **characterised in that**
- the line bundle (30) includes at least two highly flexible stranded lines, in particular stranded lines with an individual wire diameter < 0.1 mm, in particular ≤ 0.08 mm and/or super-fine stranded lines; and/or
- that the line bundle (30) includes at least two stranded lines having an insulation (22) comprising a fluoropolymer like for example a PTFE, PFA, PVDF, ETFE, FEP or the like; and/or
- that the line bundle (30) includes a tension-resistant core element.

5. A method according to one of claims 1 to 4 **characterised in that** the line bundle (30) includes a wire bundle comprising at least six layer-stranded or bundle-stranded wires (20).

6. A method according to one of claims 1 to 5 **characterised in that** the opened enclosure (100; 500) is dust-tightly closed after introduction of the line bundles (30) by means of the closure profiles (511, 512).

7. A method according to one of claims 1 to 6 **characterised in that** each enclosure unit (101; 501; 901) is prefabricated and has two fixing strips (520, 521; 920, 921) which are in opposite relationship at both sides and which are in one piece with the enclosure unit (101; 501; 901), including the step of connecting the prefabricated enclosure units (101; 501; 901) together in parallel to form an enclosure (100; 500; 900).

8. A line guide for lines like for example cables, hoses or the like, in particular for a clean room application, comprising an elongate flexible enclosure (100; 500; 900) which is reciprocatingly displaceable in particular with the formation of a direction-changing arc (4) between two runs (1, 3), and has a plurality of receiving means (902; 1002; 1102) for at least one respective line, wherein each receiving means (902; 1002; 1102) extends passage-like in a longitudinal direction (L) from a first end to a second end,
wherein the enclosure (100; 500; 900) is separately prefabricated and a respective line bundle (30) is introduced into at least some receiving means (902; 1002; 1102), wherein the at least one line bundle (30) of interrelated lines includes a wire bundle comprising at least two twisted wires (20) each having its own insulation, wherein the at least one line bundle (30) does not have its own respective outer sheath, and wherein the enclosure (100; 500; 900) forms the outer sheath of the line bundle (30).

9. A line guide according to claim 8 **characterised in that** each line bundle of interrelated lines includes a wire bundle comprising at least two twisted wires each having their own insulation; and each line bundle (30) does not have its own outer sheath.

10. A line guide according to claim 8 oder 9, **characterised in that** the line bundle (30) includes an outward separating layer (23) comprising a slidable material, preferably a material which at its outside includes a fluoropolymer.

11. A line guide according to claim 10 **characterised in that** the outward separating layer is in the form of banding, in particular strips of a PTFE-bearing film (23) or a PTFE-bearing non-woven fabric, wherein the banding preferably has at least one wrapping, in particular two wrappings in opposite directions.

12. A line guide according to one of claims 8 to 11 **characterised in that**
- the line bundle (30) includes at least two highly flexible stranded lines, in particular stranded lines with an individual wire diameter < 0.1 mm, in particular ≤ 0.08 mm and/or super-fine stranded lines; and/or
- that the line bundle (30) includes at least two stranded lines having an insulation comprising a fluoropolymer like for example a PTFE, PFA, PVDF, ETFE, FEP or the like; and/or
- that the line bundle (30) includes a tension-resistant core element.

13. A line guide according to one of claims 8 to 12 **characterised in that** the line bundle (30) includes a wire bundle comprising at least six layer-stranded or bundle-stranded wires (20).

14. A method according to one of claims 1 to 7 or a line guide according to one of claims 8 to 13 **characterised in that** each line bundle (30) is replaceably introduced into a corresponding receiving means (902; 1002; 1102) of the prefabricated enclosure (100; 500; 900).

15. A method according to one of claims 1 to 7 or a line guide according to one of claims 8 to 13 **characterised in that** the prefabricated enclosure (500; 900)
- has a plurality of enclosure units (501) respectively produced with cooperating closure profiles (511, 512), in particular enclosure units (501) which are extruded in one piece in the opened state; and/or
- has a plurality of enclosure units (901) which are produced peripherally closed, in particular enclosure units (901) extruded in the form of closed profiles, and/or
- each enclosure unit (501; 901) has two fixing strips (520, 521; 920, 921) which are opposite on both sides and which are in one piece with the enclosure units (501; 901) and by means of which adjacent enclosure units (501; 901) are connected together in parallel, and/or
- the enclosure (500; 900) comprises enclosure units (501; 901) of flexurally elastic plastic, wherein each enclosure unit (501; 901) is of a cross-section which remains the same in the longitudinal direction (L).

16. A line guide for a clean room application produced by the method according to one of claims 1 to 7.

## Revendications

1. Procédé de fabrication d'un guidage pour lignes pour une application en salle blanche, avec des lignes électriques et avec une enveloppe flexible allongée (100 ; 500 ; 900) qui peut être déplacée selon un mouvement de va-et-vient, notamment en formant un coude de déviation (4) entre deux brins (1, 3), l'enveloppe flexible (100 ; 500 ; 900) présentant un nombre de compartiments parallèles (902 ; 1002 ; 1102) pour chacun au moins une ligne, chaque compartiment (902 ; 1002 ; 1102) s'étendant sous forme de canal dans un sens longitudinal (L) d'une première extrémité à une deuxième extrémité ; le procédé comprenant au moins les étapes :
- mise à disposition d'au moins un faisceau de lignes (30) de lignes contiguës ; et
- mise à disposition de l'enveloppe flexible (100 ; 500 ; 900) ; l'enveloppe (100 ; 500 ; 900) étant préfabriquée et le faisceau de lignes (30) étant introduit dans un compartiment (902 ; 1002 ; 1102) de l'enveloppe préfabriquée (100 ; 500 ; 900), le au moins un faisceau de lignes (30) de lignes contiguës comprenant un faisceau de conducteurs composé d'au moins deux conducteurs toronnés (20) ayant chacun sa propre isolation (22), le au moins un faisceau de lignes (30) n'ayant pas sa propre gaine extérieure, et
- l'enveloppe préfabriquée (100 ; 500) comprenant au moins une unité d'enveloppe (101 ; 501) avec deux profilés de fermeture coopérants (511, 512) d'une fermeture (510) en vue de fermer de manière étanche à la poussière un état ouvert et le faisceau de lignes (30) étant inséré perpendiculairement au sens longitudinal (L) dans l'enveloppe ouverte (100 ; 500) ;
ou
- l'enveloppe préfabriquée (900) comprenant au moins une unité d'enveloppe fabriquée de façon à être fermée sur son pourtour (901) et le faisceau de lignes (30) étant enfilé dans le sens longitudinal (L) dans l'unité d'enveloppe fermée (901).

2. Procédé selon la revendication 1, **caractérisé en ce que** le faisceau de lignes (30) comprend une couche de séparation extérieure (23) avec un matériau glissant, de préférence un matériau comprenant à l'extérieur un fluoropolymère.

3. Procédé selon la revendication 2, **caractérisé en ce que** la couche de séparation extérieure (23) est réalisée comme enrubannage, en particulier en rubans d'un film contenant du PTFE (23) ou d'un non-tissé contenant du PTFE, l'enrubannage présentant de préférence au moins un enroulement, en particulier deux enroulements de sens opposé.

4. Procédé selon l'une des revendications 1 à 3, **caractérisé en ce**
- **que** le faisceau de lignes (30) comprend au moins deux lignes toronnées hautement flexibles, en particulier des lignes toronnées à diamètre de fil individuel < 0,1 mm, en particulier ≤ 0,08 mm, et/ou des lignes toronnées à fils extrafins ; et/ou
- **que** le faisceau de lignes (30) comprend au moins deux lignes toronnées qui présentent une isolation (22) composée d'un fluoropolymère, comme p.ex. un PTFE, PFA, PVDF, ETFE, FEP ou similaire ; et/ou
- **que** le faisceau de lignes (30) a un élément central résistant à la traction.

5. Procédé selon l'une des revendications 1 à 4, **caractérisé en ce que** le faisceau de lignes (30) comprend un faisceau de conducteurs composé d'au moins six conducteurs (20) toronnés en couches ou en faisceaux.

6. Procédé selon l'une des revendications 1 à 5, **caractérisé en ce que** l'enveloppe ouverte (100 ; 500) est fermée de manière étanche à la poussière à l'aide des profilés de fermeture (511, 512) après insertion des faisceaux de lignes (30).

7. Procédé selon l'une des revendications 1 à 6, **caractérisé en ce que** chaque unité d'enveloppe (101 ; 501 ; 901) est préfabriquée et présente deux attaches de fixation opposées des deux côtés (520, 521 ; 920, 921) d'une seule pièce avec l'unité d'enveloppe (101 ; 501 ; 901), comportant l'étape consistant à assembler les unités d'enveloppe préfabriquées (101 ; 501 ; 901) parallèlement entre elles pour réaliser une enveloppe (100 ; 500 ; 900).

8. **Guidage pour lignes,** comme p. ex. des câbles, des tuyaux flexibles ou similaires, en particulier pour une application en salle blanche, avec une enveloppe flexible allongée (100 ; 500 ; 900) qui peut être déplacée selon un mouvement de va-et-vient, notamment en formant un coude de déviation (4) entre deux brins (1, 3), et présente plusieurs compartiments (902 ; 1002 ; 1102) pour chacun au moins une ligne, chaque compartiment (902 ; 1002 ; 1102) s'étendant sous forme de canal dans un sens longitudinal (L) d'une première extrémité à une deuxième extrémité ; l'enveloppe (100 ; 500 ; 900) étant préfabriquée séparément et un faisceau de lignes (30) étant introduit respectivement dans au moins quelques compartiments (902 ; 1002 ; 1102), au moins un faisceau de lignes (30) de lignes contiguës comprenant un faisceau de conducteurs d'au moins deux conducteurs toronnés (20) ayant chacun leur propre isolation (22), le au moins un faisceau de lignes (30) n'ayant pas sa propre gaine extérieure, et l'enveloppe (100 ; 500 ; 900) constituant la gaine extérieure des faisceaux de lignes (30).

9. Guidage pour lignes selon la revendication 8, **caractérisé en ce que** chaque faisceau de lignes composé de lignes contiguës comprend un faisceau de conducteurs composé d'au moins deux conducteurs toronnés ayant chacun sa propre isolation et que chaque faisceau de lignes (30) n'a pas sa propre gaine extérieure.

10. Guidage pour lignes selon la revendication 8 ou 9, **caractérisé en ce que** le faisceau de lignes (30) comprend une couche de séparation extérieure (23) avec un matériau glissant, de préférence un matériau comprenant à l'extérieur un fluoropolymère.

11. Guidage pour lignes selon la revendication 10, **caractérisé en ce que** la couche de séparation extérieure est réalisée comme enrubannage, en particulier en rubans d'un film contenant du PTFE (23) ou d'un non-tissé contenant du PTFE, l'enrubannage présentant de préférence au moins un enroulement, en particulier deux enroulements de sens opposé.

12. Guidage pour lignes selon l'une des revendications 8 à 11, **caractérisé en ce**
- **que** le faisceau de lignes (30) comprend au moins deux lignes toronnées hautement flexibles à diamètre de fil individuel < 0,1 mm, en particulier ≤ 0,08 mm, et/ou des lignes toronnées à fils extrafins ; et/ou
- **que** le faisceau de lignes (30) comprend au moins deux lignes toronnées qui présentent une isolation composée d'un fluoropolymère, comme un PTFE, PFA, PVDF, ETFE, FEP ou similaire ; et/ou
- **que** le faisceau de lignes (30) a un élément central résistant à la traction.

13. Guidage pour lignes selon l'une des revendications 8 à 12, **caractérisé en ce que** le faisceau de lignes (30) comprend un faisceau de conducteurs composé d'au moins six conducteurs (20) toronnés en couches ou en faisceaux.

14. Procédé selon l'une des revendications 1 à 7 ou guidage pour lignes selon l'une des revendications 8 à 13, **caractérisé en ce que** chaque faisceau de lignes (30) est inséré de manière interchangeable dans un logement correspondant (902 ; 1002 ; 1102) de l'enveloppe préfabriquée (100 ; 500 ; 900).

15. Procédé selon l'une des revendications 1 à 7 ou guidage pour lignes selon l'une des revendications 8 à 13, **caractérisé en ce que** l'enveloppe préfabriquée (500 ; 900)
- présente plusieurs unités d'enveloppe (501) produites chacune avec des profilés de fermeture coopérants (511, 512), en particulier des unités d'enveloppe (501) extrudées d'une pièce à l'état ouvert ; et/ou
- présente plusieurs unités d'enveloppe fabriquées de façon à être fermées sur leur pourtour (901), en particulier des unités d'enveloppe (901) extrudées sous forme de profilés fermés et/ou
- chaque unité d'enveloppe (501 ; 901) présente deux attaches de fixation opposées des deux côtés (520, 521 ; 920, 921) d'une seule pièce avec l'unité d'enveloppe (501 ; 901), au moyen desquelles des unités d'enveloppe voisines (501 ; 901) sont reliées parallèlement entre elles ; et/ou
- l'enveloppe (500 ; 900) est composée d'unités d'enveloppe (501 ; 901) en matière plastique souple en flexion, chaque unité d'enveloppe (501 ; 901) ayant une section transversale constante dans le sens longitudinal (L).

16. Guidage pour lignes pour une application en salle blanche, fabriqué avec le procédé selon une des revendications 1 à 7.
